# EUROPÄISCHE PATENTSCHRIFT

(11) **EP 3 420 316 B1**
(45) Veröffentlichungstag und Bekanntmachung des Hinweises auf die Patenterteilung: **22.02.2023**
(21) Anmeldenummer: 17707267.5
(22) Anmeldetag: 24.02.2017
(51) Int. Cl.: G01D 5/20

(54) **DREHWINKELSENSOR**
ROTATION ANGLE SENSOR
CAPTEUR D'ANGLE DE ROTATION

(30) Priorität: 24.02.2016 DE 102016202877
(43) Veröffentlichungstag der Anmeldung: 02.01.2019
(73) Patentinhaber: Robert Bosch GmbH, 70442 Stuttgart (DE)
(72) Erfinder: UTERMOEHLEN, Fabian, 71229 Leonberg (DE); MERZ, Andreas, 71691 Freiberg Am Neckar (DE)
(86) Internationale Anmeldenummer: PCT/EP2017/054279
(87) Internationale Veröffentlichungsnummer: WO 2017/144638

(56) Entgegenhaltungen:
- EP-A2- 0 845 659
- DE-A1- 4 021 637
- DE-T5-112011 100 330
- FR-A1- 3 023 611

## Beschreibung

### Gebiet der Erfindung

Die Erfindung betrifft einen Drehwinkelsensor, mit dem beispielsweise ein Drehwinkel zwischen einer Welle und einem weiteren Bauteil bestimmt werden kann. Außerdem betrifft die Erfindung ein Statorelement für einen derartigen Drehwinkelsensor.

### Stand der Technik

Um Drehwinkel zu messen, sind beispielsweise Drehwinkelsensoren bekannt, bei denen ein Magnet über einen entsprechenden Magnetfeldsensor gedreht wird. Die Messung des Magnetfeldvektors erlaubt dann einen Rückschluss auf den Drehwinkel. Derartige Sensoren reagieren auch auf externe Magnetfelder, die beispielsweise durch einen Stromfluss von benachbart angeordneten Stromkabeln verursacht werden und können sehr störempfindlich sein.

Ein weiterer Typ Drehwinkelsensor nutzt einen Wirbelstromeffekt aus. Dabei wird beispielsweise ein metallisches Target über Sensorspulen bewegt, die mit einer Wechselspannung versorgt werden und in dem Target einen Wirbelstrom induzieren. Dies führt zur Reduzierung der Induktivitäten der Sensorspulen und erlaubt, über eine Frequenzänderung auf den Drehwinkel zu schließen. Beispielsweise sind die Spulen Bestandteil eines Schwingkreises, dessen Resonanzfrequenz sich bei einer Veränderung der Induktivität verschiebt. Dieser Typ von Drehwinkelsensor kann jedoch eine hohe Querempfindlichkeit gegenüber Einbautoleranzen (vor allem ein Verkippen des Targets) aufweisen. Auch kann die erzeugte Frequenz durch externe elektromagnetische Felder gestört werden (Injection Locking), da üblicherweise mit Frequenzen im Bereich von einigen zehn MHz gearbeitet wird.

Die EP 0 909 955 B1 zeigt einen Drehwinkelsensor mit auf einem Target kurzgeschlossene planare Leiterschleifen, die mit dem elektromagnetischen Wechselfeld einer Erregerspule wechselwirken.

Dabei wird ein Signal generiert, welches z.B. einem Rechtecksignal in Abhängigkeit vom Drehwinkel ähnelt und von einer Auswerteeinheit aufwändig in den Drehwinkel umgerechnet werden muss. Durch die steilen Flanken derartiger Signale kann die Winkelauflösung eingeschränkt sein.

Aus der DE 40 21 637 A1 ist ein induktiver Stellungsgeber mit einer Statoreinheit bekannt. Die Statoreinheit ist aus einem Kern aus ferromagnetischem Material gestaltet und weist eine Nut auf, in der eine Erregerspule angeordnet ist. Auf dem Kern ist eine Schaltungsplatine angeordnet, auf der eine Messspule angeordnet ist, welche sich in radialer Richtung betrachtet teilweise innerhalb und teilweise außerhalb der Erregerspule befindet.

Aus der FR 3 023 611 A1 ist ein induktiver Sensor bekannt.

Aus der EP 0 845 659 A2 ist eine Positionsmesseinrichtung bekannt, bei der auf einem Statorelement jeweils seitlich benachbart zu Abtastspuren Erregerelemente in Form von Sendespulen angeordnet sind.

### Offenbarung der Erfindung

### Vorteile der Erfindung

Ausführungsformen der vorliegenden Erfindung können in vorteilhafter Weise ermöglichen, einen robusten, kostengünstigen und wenig Bauraum beanspruchenden Drehwinkelsensor bereitzustellen, bei dem die erzeugten Sensorsignale leicht ausgewertet werden können.

Ideen zu Ausführungsformen der vorliegenden Erfindung können unter anderem als auf den nachfolgend beschriebenen Gedanken und Erkenntnissen beruhend angesehen werden.

Die Erfindung betrifft einen Drehwinkelsensor, der insbesondere in einer Umgebung mit hohen elektromagnetischen Störfeldern eingesetzt werden kann. Beispielsweise kann der Drehwinkelsensor im Motorraum oder in der Nähe des Motorraums eines Fahrzeugs verwendet werden, beispielsweise zur Bestimmung einer Position einer Drosselklappe, einer Rotorposition eines BLDC-Motors, einer Position eines Fahrpedals oder einer Position einer Nockenwelle. Der im Folgenden beschriebene Drehwinkelsensor ist kostengünstig, benötigt einen geringen Bauraum und basiert auf einem einfachen Messprinzip.

Gemäß einer Ausführungsform der Erfindung umfasst der Drehwinkelsensor ein Statorelement mit einer Sendespule und wenigstens zwei innerhalb der Sendespule angeordneten Empfangsspulen, die auf einer Leiterplatte angeordnet sind und ein bezüglich des Statorelements um eine Drehachse drehbar gelagertes Rotorelement, über das die Sendespule mit den wenigstens zwei Empfangsspulen induktiv gekoppelt ist, so dass die induktive Kopplung von einem Drehwinkel zwischen dem Statorelement und dem Rotorelement abhängig ist und die Sendespule in den wenigstens zwei Empfangsspulen wenigstens zwei winkelabhängige Wechselspannungen induziert.

Unter dem Begriff "innerhalb der Sendespule" ist dabei zu verstehen, dass sich in einer Ebene, in der die Sendespule angeordnet ist, die Empfangsspulen in der Ebene oder in einer Projektion auf diese Ebene innerhalb der (Außen)Kontur der Sendespule angeordnet sind.

Das Statorelement, das auch eine Auswerteeinheit tragen kann, kann beispielsweise gegenüber dem Ende einer Welle angeordnet sein, auf dem das Rotorelement befestigt ist. Das Rotorelement kann eines oder mehrere Induktionssegmente tragen, die mit der Welle mitbewegt werden, die Empfangsspulen überdecken und dadurch die Induktivität der Empfangsspulen bzw. die jeweilige induktive Kopplung zwischen der Sendespule und den Empfangsspulen verändert. Wird die Sendespule mit einer Wechselspannung bestromt, werden in den Empfangsspulen Wechselspannungen induziert, deren Amplitude von der jeweiligen induktiven Kopplung abhängt. Aus diesen Wechselspannungen bzw. deren Amplituden, die der Sensor als Messsignale abgibt, kann beispielsweise die Auswerteeinheit dann ein Drehwinkelsignal berechnen. Der Drehwinkelsensor kann auf diese Weise kostengünstig realisiert werden, da kein teurer Magnet benötigt wird.

Gemäß einer Ausführungsform der Erfindung sind das Rotorelement und die wenigstens zwei Empfangsspulen derart ausgebildet, dass in den Empfangsspulen eine Wechselspannung induziert wird, deren Amplitude sinusförmig von dem Drehwinkel abhängig ist. Mit anderen Worten ist das von einer Empfangsspule bereitgestellte Messsignal, d.h. die Amplitude der in der Empfangsspule induzierten Wechselspannung, aufgrund der Geometrie der Empfangsspulen und des Rotorelements sinusförmig bzw. eine Sinusfunktion, die vom Drehwinkel abhängt.

Es ist zu verstehen, dass ein sinusförmiges Messsignal ein Signal sein kann, dass weniger als 5% bzw. weniger als 1% von einer reinen Sinusfunktion abweichen.

Beispielsweise können auf dem Statorelement zwei oder drei, z.B. in Umfangsrichtung gegeneinander um einen bestimmten Winkel versetzte, Empfangsspulen angeordnet sein, die winkelversetzte Messsignale liefern. Bei zwei oder drei Empfangsspulen können Sinussignale als Messsignale besonders einfach ausgewertet werden, da eine Rücktransformation möglich ist. Dies kann eine Arcus-Tangens-Transformation bei zwei Empfangsspulen (d.h. einem Zweiphasensystem) oder eine Clarke-Transformation bei drei Empfangsspulen (d.h. einem Dreiphasensystem) sein. Mit diesen Rücktransformationen können auch auf einfache Art und Weise Offsets aus den Messsignalen herausgerechnet werden, die beispielsweise durch mechanische Toleranzen entstehen.

Es ist auch möglich, dass sich auf dem Statorelement zwei redundante Empfangsspulensysteme (beispielsweise aus jeweils zwei oder drei Empfangsspulen) befinden. In diesem Falle können die Messsignale des jeweiligen Empfangsspulensystems auf oben genannte Art und Weise ausgewertet werden. Dadurch ist bei einem Ausfall eines Systems weiterhin die Bestimmung des Drehwinkels möglich, was die Sicherheit bei kritischen Systemen erhöhen kann.

Gemäß einer Ausführungsform der Erfindung sind die wenigstens zwei Empfangsspulen aus miteinander elektrisch verbundenen kreisbogenförmigen Leiterbahnen aufgebaut, so dass jede der wenigstens zwei Empfangsspulen aus bezüglich eines Stromflusses gegenläufig orientierten Teilwindungen aufgebaut ist, von denen jede in einer radialen Richtung von wenigstens einer nach links gekrümmten, z.B. kreisbogenförmigen, Leiterbahn und wenigstens einer gegenüberliegenden nach rechts gekrümmten, z.B. kreisbogenförmigen, Leiterbahn begrenzt ist.

Mit anderen Worten ist jede der Empfangsspulen derart aufgebaut, dass eine gedachte gerade Linie, die von der Drehachse ausgeht und in radiale Richtung verläuft, eine nach links und eine nach rechts gekrümmte kreisbogenförmige Leiterbahn der Empfangsspule schneidet, wenn die gerade Linie durch das Innere der Empfangsspule verläuft. Auf diese Weise wird erreicht, dass die Amplitude der in der Empfangsspule induzierten Wechselspannung bzw. das Messsignal im Wesentlichen als Sinusfunktion von dem Drehwinkel abhängt.

Eine Teilwindung einer Empfangsspule kann dabei als ein Teil der Empfangsspule definiert sein, der von Leiterbahnen der Empfangsspule umgeben ist, die sich nicht gegenseitig schneiden. Die Orientierung einer Teilwindung bestimmt sich über einen Stromfluss durch die Empfangsspule. Gegenläufig orientierte Teilwindungen weisen bei einem Stromfluss durch die Empfangsspule jeweils gegenläufig Stromflüsse auf, d.h. bei einer Teilwindung mit einer ersten Orientierung läuft der Strom im Uhrzeigersinn bzw. nach rechts durch die Teilwindung, bei einer Teilwindung mit einer zweiten, gegenläufigen Orientierung läuft der Strom gegen den Uhrzeigersinn bzw. nach links durch die Teilwindung.

Die Sendespule und die Empfangsspulen müssen die Drehachse nicht komplett umrunden, sondern können auch in lediglich einem Kreissektor bezüglich eines Kreises um die Drehachse angeordnet sein. In diesem Fall bestimmt der Öffnungswinkel der Empfangsspulen den Messbereich. Auf diese Weise kann das Statorelement auch kleiner gebaut werden als bei einem Drehwinkelsensor, der die vollen 360° erfassen soll.

Gemäß einer Ausführungsform der Erfindung sind die wenigstens zwei Empfangsspulen in einem Ringsektorbereich innerhalb der Sendespule angeordnet, der durch einen Innenkreis um die Drehachse, einen Außenkreis um die Drehachse und zwei den Innenkreis mit dem Außenkreis verbindenden Radiallinien definiert ist, die über einen Messbereich des Drehwinkelsensors voneinander beabstandet sind. Die Sendespule kann den Ringsektorbereich umgeben und auch im Wesentlichen wie der Umfang eines (etwas größeren) Ringsektors geformt sein. Die Enden der kreisbogenförmigen Leiterbahnen können dabei auf dem Ringsektorbereich liegen.

Gemäß einer Ausführungsform der Erfindung weisen die kreisbogenförmigen Leiterbahnen alle einen gleichen Krümmungsradius auf. Der Krümmungsradius kann der Radius eines Kreises sein, durch den eine kreisbogenförmige Leiterbahn definiert ist. Es ist zu verstehen, dass die Mittelpunkte dieser Kreise außerhalb des Ringsektorbereichs liegen können, in dem die Empfangsspulen angeordnet sind. Dadurch ist der Drehwinkelsensor vorteilhaft besonders einfach und kostengünstig herstellbar. Weiterhin vorteilhaft kann dadurch die Abweichung des Messsignals von einem idealen Sinussignal vorteilhaft verringert werden und die Genauigkeit der Winkelbestimmung kann dadurch vorteilhaft verbessert werden.

Gemäß einer Ausführungsform der Erfindung sind Teilwindungen verschiedener Empfangsspulen um einen Winkel zueinander versetzt, der durch den halben Messbereich geteilt durch die Anzahl der Empfangsspulen bestimmt ist. Auf diese Weise ergeben sich je Empfangsspule maximal unterschiedliche Messsignale. Dadurch wird vorteilhaft die Genauigkeit der Winkelbestimmung verbessert.

Gemäß einer Ausführungsform der Erfindung weist eine Empfangsspule Teilwindungen mit unterschiedlicher Fläche auf. Dabei kann bei einer Empfangsspule die Fläche aller in einer ersten Richtung orientierten Teilwindungen gleich der Fläche aller in einer zweiten Richtung orientierten Teilwindungen sein. Beispielsweise kann eine erste Empfangsspule gleich große Teilwindungen aufweisen, während eine zweite Empfangsspule eine erste, z.B. mittlere, Teilwindung aufweist, die genauso groß ist wie die Teilwindungen der ersten Empfangsspule, die aber zu diesen Teilwindungen winkelversetzt ist. Weiter kann die zweite Empfangsspule in Umfangsrichtung neben der ersten, z.B. mittleren, Teilwindung zwei kleinere, z.B. seitliche, Teilwindungen (eine zweite Teilwindung und eine dritte Teilwindung) aufweisen, die zu der ersten, z.B. mittleren, Teilwindung gegenläufig orientiert sind, aber zusammen die gleiche Fläche überdecken wie die erste, z.B. mittlere, Teilwindung.

Gemäß einer Ausführungsform der Erfindung weist wenigstens eine Empfangsspule gerade Leiterbahnen auf, die entlang der Radiallinien des Ringsektorbereichs verlaufen. Auf diese Weise können kreisbogenförmige Leiterbahnen seitlicher Teilwindungen miteinander elektrisch verbunden werden, um die seitlichen Teilwindungen zu formen. Dies kann z.B. für Leiterbahnen der Fall sein, die seitlich, d.h. in Umfangsrichtung, über den Ringsektorbereich hinauslaufen würden.

Gemäß einer Ausführungsform der Erfindung sind die wenigstens zwei Empfangsspulen in (lediglich) zwei Ebenen der Leiterplatte gebildet, d.h. insbesondere auf den Außenflächen. Auf diese Weise kann die Leiterplatte kostengünstig hergestellt werden. Es ist keine mehrlagige Leiterplatte notwendig, insbesondere keine Leiterplatte mit mehr als zwei Lagen. Dadurch kann die Herstellung wesentlich vereinfacht und kostengünstiger ausgeführt werden.

Dies kann dadurch bewerkstelligt werden, dass an Enden der kreisbogenförmigen Leiterbahnen Durchkontaktierungen vorgesehen sind, bei denen kreisbogenförmige Leiterbahnen in unterschiedlichen Ebenen verbunden werden. Insbesondere können die kreisbogenförmigen Leiterbahnen einer Empfangsspule abwechselnd in gegenüberliegenden Ebenen der Leiterplatte angeordnet sein.

Gemäß einer Ausführungsform der Erfindung weist das Rotorelement wenigstens ein Induktionssegment mit einer anderen Leitfähigkeit als in Umfangsrichtung um die Drehachse daneben liegende Bereiche des Rotorelements auf. Das Induktionssegment kann beispielsweise ein metallisches Segment sein (mit einer hohen Leitfähigkeit), das auf einem nichtmetallischen Teil des Rotorelements befestigt ist, es kann eine metallische Erhebung auf dem Rotorelement sein, kann aber auch eine Aussparung (mit niedriger Leitfähigkeit) in einem metallischen Rotorelement sein.

Beispielsweise kann das wenigstens eine Induktionssegment ringsektorförmig sein. Es ist möglich, dass das Rotorelement mehrere gleichartig geformte Induktionssegmente aufweist.

Gemäß einer Ausführungsform der Erfindung weist das wenigstens eine Induktionssegment in Umfangsrichtung einen Öffnungswinkel (d.h. einen Maximalwinkel, der von dem Induktionssegment aufgespannt wird) auf, der halb so groß ist wie der Messbereich des Drehwinkelsensors. Auch Teilwindungen der Empfangsspulen können einen derartigen Öffnungswinkel aufweisen. Auf diese Weise kann eine maximale Änderung der Messsignale über den Messbereich erreicht werden. Dadurch kann vorteilhaft eine verbesserte Genauigkeit erzielt werden und ein robusteres Signal bereitgestellt werden.

Gemäß einer Ausführungsform der Erfindung weist das wenigstens eine Induktionssegment mehrere radiale Aussparungen mit anderer Leitfähigkeit als das Induktionssegment auf. Die Aussparungen können an einem Rand in Umfangsrichtung des Induktionssegments angeordnet sein, wobei das Induktionssegment einen größeren Öffnungswinkel aufweisen kann als der halbe Messbereich. Die Aussparungen können in Umfangsrichtung mit einem Winkel beabstandet sein, der halb so groß ist wie der Messbereich des Drehwinkelsensors. Das Induktionssegment kann in ein großes Teilsegment und in Umfangsrichtung davon beabstandete kleinere Teilsegmente aufgeteilt sein.

Mit diesen Aussparungen kann das Messsignal geformt werden, da die kleinen Teilsegmente die induktive Kopplung von Teilwindungen beeinflussen können, die benachbart zu einer Teilwindung angeordnet sind, die gerade von dem großen Teilsegment bedeckt ist. Insbesondere kann ein Messsignal, das noch aufgrund der Empfangsspulen kleinere Abweichungen von einer Sinusfunktion aufweist, mit dem Induktionssegment so beeinflusst werden, dass die Abweichungen geringer werden.

Ein weiterer Aspekt der Erfindung betrifft ein Statorelement für einen Drehwinkelsensor, so wie es obenstehend und untenstehend beschrieben ist.

Gemäß einer Ausführungsform der Erfindung umfasst das Statorelement eine Sendespule und wenigstens zwei innerhalb der Sendespule angeordnete Empfangsspulen, die auf einer Leiterplatte angeordnet sind; wobei die wenigstens zwei Empfangsspulen aus miteinander elektrisch verbundenen kreisbogenförmigen Leiterbahnen aufgebaut sind, so dass jede der wenigstens zwei Empfangsspulen aus bezüglich eines Stromflusses gegenläufig orientierten Teilwindungen aufgebaut ist, von denen jede in einer radialen Richtung von wenigstens einer nach links gekrümmten, z.B. kreisbogenförmigen, Leiterbahn und wenigstens einer gegenüberliegenden nach rechts gekrümmten, z.B. kreisbogenförmigen, Leiterbahn begrenzt ist.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt schematisch einen Längsschnitt durch einen Drehwinkelsensor gemäß einer Ausführungsform der Erfindung.
Fig. 2 zeigt eine schematische Draufsicht auf ein Statorelement für den Drehwinkelsensor aus der Fig. 1.
Fig. 3 zeigt eine schematische Draufsicht auf das Statorelement aus der Fig. 2, bei dem lediglich eine erste Empfangsspule dargestellt ist.
Fig. 4 zeigt eine schematische Draufsicht auf das Statorelement aus der Fig. 2, bei dem lediglich eine zweite Empfangsspule dargestellt ist.
Fig. 5 zeigt eine schematische Draufsicht auf das Statorelement aus der Fig. 2, bei dem lediglich eine dritte Empfangsspule dargestellt ist.
Fig. 6 zeigt eine schematische Draufsicht auf ein Rotorelement für den Drehwinkelsensor aus der Fig. 1.
Fig. 7 zeigt eine schematische Draufsicht auf ein alternatives Induktionssegment für das Rotorelement aus der Fig. 6.
Fig. 8 zeigt ein Diagramm mit Messsignalen, die von einem Drehwinkelsensor gemäß einer Ausführungsform der Erfindung erzeugt werden.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

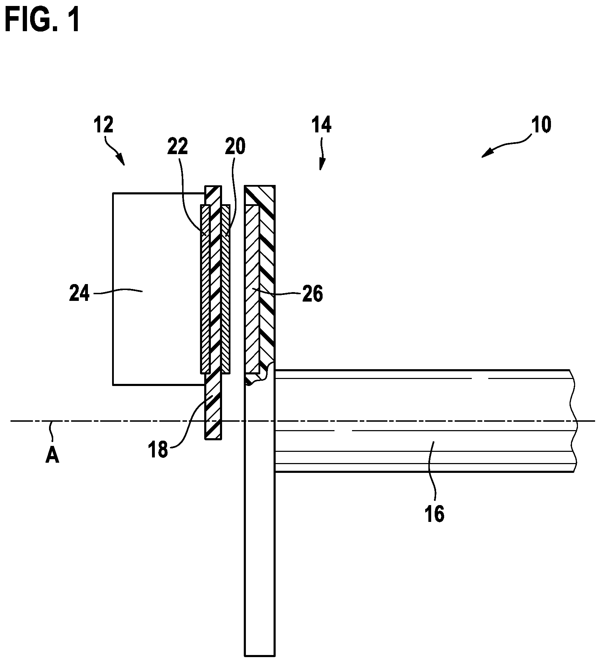

Fig. 1 zeigt einen Drehwinkelsensor 10 aus einem Statorelement 12 und einem Rotorelement 14. Das Rotorelement 14 kann auf einer Welle 16 eines Bauteils, wie etwa einer Drosselklappe, einem Motor, einer Nockenwelle, eines Fahrpedals usw., befestigt sein oder von dieser Welle 16 bereitgestellt werden. Die Welle 16 ist um die Achse A drehbar und das Statorelement 12 liegt dem Rotorelement 14 in der entsprechenden axialen Richtung gegenüber. Beispielsweise ist das Statorelement 12 an einem Gehäuse des Bauteils befestigt.

Das Statorelement 12 umfasst eine Leiterplatte 18, auf der eine Sendespule 20 und mehrere Empfangsspulen 22 mit Leiterbahnen auf der Leiterplatte 18 ausgeführt sind. Die Leiterbahnen der Spulen 20, 22 können sich auf den beiden Seiten der Leiterplatte 18 befinden. Die Leiterbahnen können mittels Vias (Durchkontaktierungen) durch die Leiterplatte hindurch elektrisch miteinander verbunden sein. Auf der Leiterplatte 18 können sich weitere Bauelemente für eine Auswerteeinheit 24 befinden. Die Auswerteeinheit 24 kann die Sendespulen 20 mit einer Wechselspannung versorgen und induzierte Wechselspannungen in den Empfangsspulen 22 ermitteln. Basierend auf dieser Messung kann die Auswerteeinheit 24 einen relativen Drehwinkel zwischen dem Statorelement 12 und dem Rotorelement 14 bestimmen.

Das Rotorelement 14 umfasst ein oder mehrere Induktionssegmente 26, die in axialer Richtung der Sendespulen 20 und den Empfangsspulen 22 gegenüberliegen. Die Induktionssegmente 26 können, wie in der Fig. 1 gezeigt, auf einer weiteren Leiterplatte angeordnet sein, die an der Welle 16 befestigt ist. Es ist auch möglich, dass das oder die Induktionssegmente 26 durch Bearbeiten eines Endes der Welle 16 erzeugt werden.

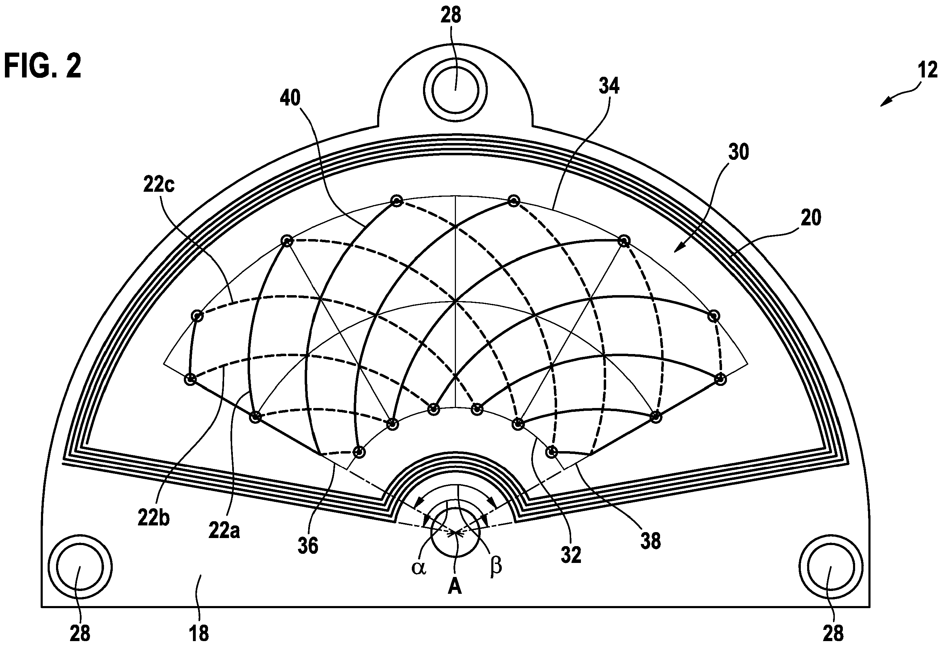

Die Fig. 2 zeigt das Statorelement 12 in Draufsicht. Die Leiterplatte 18 ist im Wesentlichen halbkreisförmig und kann Befestigungslöcher 28 aufweisen. Sowohl die Sendespule 20 als auch die Empfangsspule 22 sind als Planarspulen ausgeführt.

Die ringsektorförmige Sendespule 20 kann eine Mehrzahl von Leiterschleifen aufweisen, die auch in mehreren Ebenen einer mehrlagigen Leiterplatte 18 realisiert sein können, um ein ausreichend großes Feld erzeugen zu können.

Die erste, zweite und dritte Empfangsspule 22a, 22b, 22c sind in einem Ringsektorbereich 30 innerhalb der Sendespule 20 angeordnet, der durch einen Innenkreis 32 um die Drehachse A, einen Außenkreis 34 um die Drehachse A und zwei den Innenkreis 32 mit dem Außenkreis 34 verbindenden Radiallinien 36, 38 definiert ist. Die Radiallinien 36, 38 sind in Umfangsrichtung um einen Winkel β voneinander beabstandet, der auch den Messbereich des Drehwinkelsensors 10 darstellt.

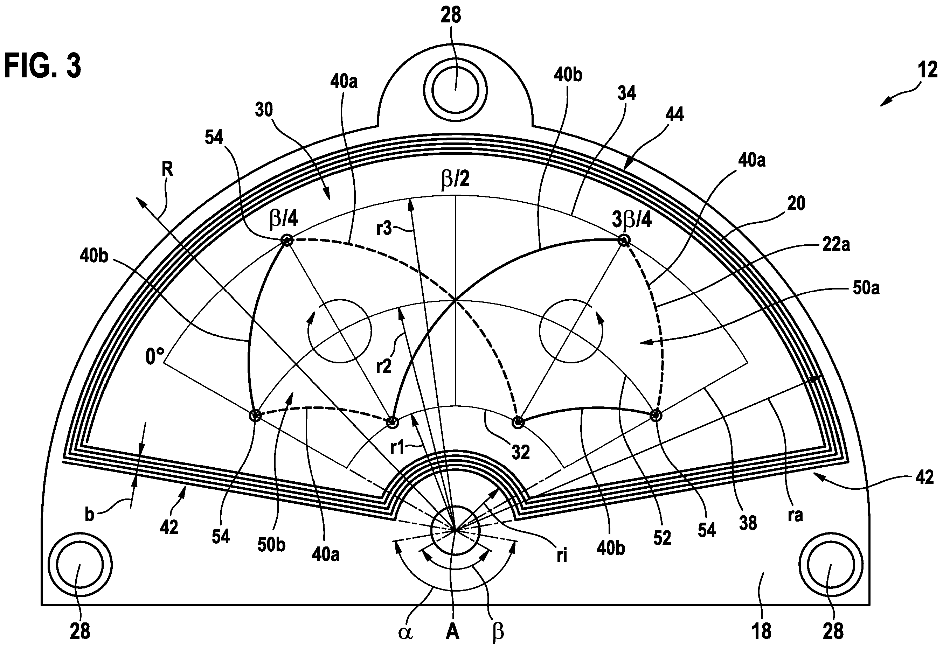

Die Empfangsspulen 22a, 22b, 22c sind aus kreisbogenförmigen Leiterbahnen 40 ausgeführt, die alle den gleichen Krümmungsradius aufweisen. Durch die spezielle Form der Empfangsspulen 22a, 22b, 22c, die in Bezug auf die Fig. 3, 4 und 5 noch genauer beschrieben wird, ist es möglich, dass in den Empfangsspulen 22a, 22b, 22c Wechselspannungen induziert werden, deren Amplituden (als Messsignale) mit einer Sinusfunktion vom Drehwinkel des Rotorelements 14 abhängen. Dies ermöglicht eine besonders leichte Auswertung der Messsignale, um den Drehwinkel zu bestimmen.

Beispielsweise kann die Sendespule 20 von der Auswerteeinheit 24 mit einer Wechselspannung beaufschlagt werden, die eine Frequenz im Bereich einiger MHz (bevorzugt 5 MHz) aufweist und/oder die Amplituden im Bereich 0.5 V bis 10 V (bevorzugt 1.5 V) aufweist. Dadurch entsteht ein elektromagnetisches Wechselfeld, welches in die Empfangsspulen 22a, 22b, 22b koppelt und dort entsprechende Wechselspannungen induziert. Durch entsprechende Formung der Induktionssegmente 26 wird die Kopplung zwischen der Sendespule 20 und den Empfangsspulen 22a, 22b, 22c drehwinkelabhängig beeinflusst. Der typische Wertebereich des Kopplungsfaktors, d.h. das Amplitudenverhältnis zwischen Empfangsspule und Sendespule, der Sendespule 20 mit den Empfangsspulen 22a, 22b, 22b kann zwischen -0.3 und +0.3 liegen. Durch Demodulation des in den Empfangsspulen 22a, 22b, 22c induzierten Messsignals mit dem Trägersignal (Signal der Sendespule) kann auf Amplitude und Phase der Kopplung geschlossen werden. Die Amplitude variiert kontinuierlich mit dem Drehwinkel. Die Phase beträgt idealerweise 0° oder 180°.

Die Fig. 3, 4 und 5 zeigen das Statorelement 12 aus der Fig. 2, wobei jeweils nur eine der Empfangsspule 22a, 22b, 22c aus Gründen der Übersichtlichkeit dargestellt ist.

Der Messbereich β des Drehwinkelsensors 10 beträgt beispielhaft 120°. Er kann prinzipiell beliebige Werte kleiner 360° einnehmen. Der Öffnungswinkel a (in der Fig. 3 ist aus Gründen der Übersichtlichkeit der Gegenwinkel eingezeichnet) der umlaufenden Sendespule 20 beträgt bevorzugt 5° bis 10° mehr als der Messbereich β des Drehwinkelsensors 10, um den Einfluss der Feldinhomogenitäten im Bereich von radial verlaufenden Leiterbahnen 42 der Sendespule 20 auf die Empfangsspulen 22a, 22b, 22c gering zu halten.

Diese radial verlaufenden Leiterbahnen 42 werden durch kreisbogenförmige Leiterbahnen 44 verbunden, die nach innen durch einen inneren Radius ri und nach außen durch einen äußeren Radius ra begrenzt werden. Der äußere Radius ra wird nach oben durch den verfügbaren Bauraum begrenzt und kann zwischen 10 und 30 mm, in etwa 25 mm, betragen. Der innere Radius ri kann so dimensioniert sein, dass bei der Drehachse A eine Wellendurchführung im Statorelement 12 ermöglicht wird, kann allerdings auch 0 mm betragen, falls diese nicht benötigt wird.

Die Empfangsspulen 22a, 22b, 22c sind aus nach links gekrümmten kreisbogenförmigen Leiterbahnen 40a und aus nach rechts gekrümmten kreisbogenförmigen Leiterbahnen 40b aufgebaut. Die jeweilige Krümmungsrichtung ist dabei aus einer Blickrichtung von der Drehachse A nach radial außen hin zu verstehen.

Beispielhaft ist in der Fig. 3 eine radiale Richtung R eingezeichnet. Diese radiale Richtung R schneidet eine innere kreisbogenförmige Leiterbahn 40a, die nach links gekrümmt ist, und eine äußere (bzw. gegenüberliegende) kreisbogenförmige Leiterbahn 40b, die nach rechts gekrümmt ist. Dasselbe gilt für alle radialen Richtungen R innerhalb des Messbereichs β mit Ausnahme der Winkel, wo die kreisförmigen Leiterbahnen 40a, 40b miteinander verbunden sind.

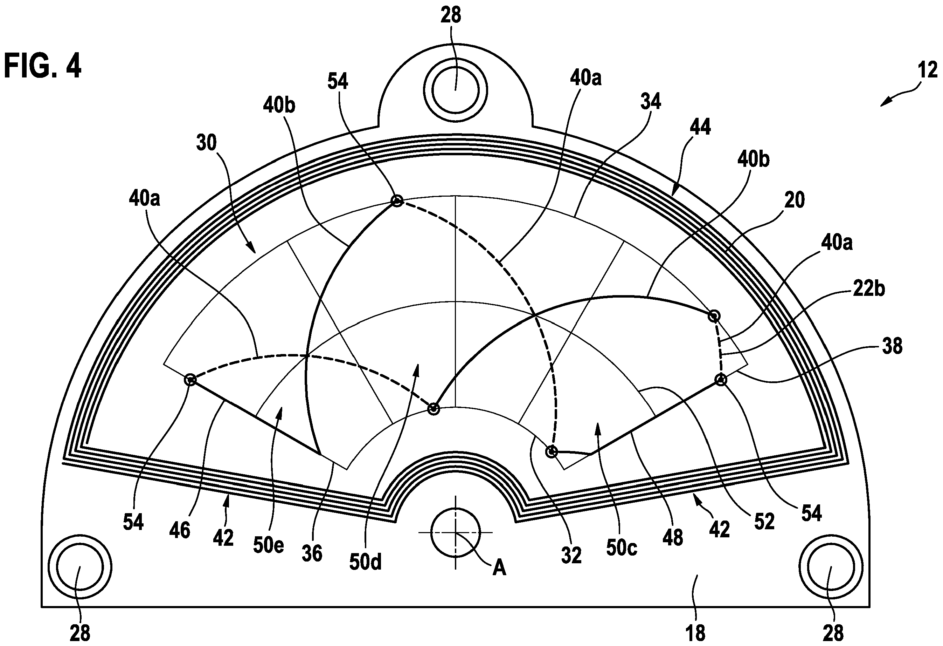

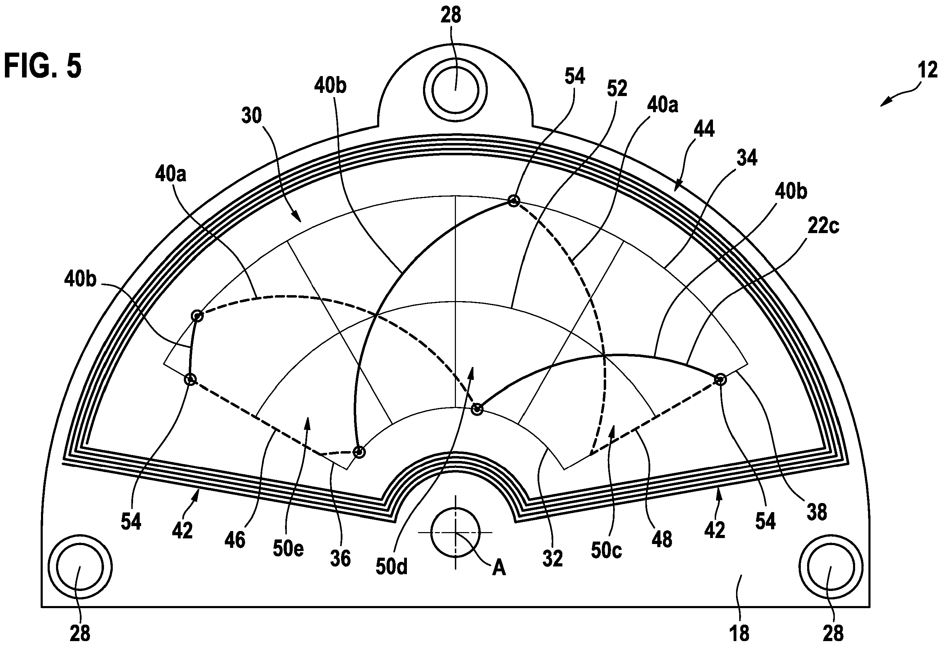

Die zweite Empfangsspule 22b und die dritte Empfangsspule 22c (Figs. 4 und 5) weisen zusätzlich gerade Leiterbahnen 46, 48 auf, die entlang der Radiallinien 36, 38 verlaufen.

Die erste Empfangsspule 22a (Fig. 3) ist lediglich aus den kreisbogenförmigen Leiterbahnen 40a, 40b zusammengesetzt, die an ihren Enden so miteinander verbunden sind, dass zwei Teilwindungen 50a, 50b gebildet sind, die gegenläufig zueinander orientiert sind, d.h. bei einem Stromfluss durch die Empfangsspule 22a von einem Strom im Uhrzeigersinn bzw. im Gegenuhrzeigersinn durchflossen werden. Die beiden Teilwindungen 50a, 50b weisen den gleichen Umriss auf. Die Flächen der Teilwindungen 50a, 50b sind gleich groß, so dass (insofern keine zusätzliche Kopplung mit Rotorelement 14 erfolgt) ein homogenes Magnetfeld durch die Empfangsspule 22a aufgehoben wird. Denn in den Teilspulen 50a, 50b werden betragsmäßig gleiche, jedoch gegenpolige Spannungen induziert.

Basierend darauf kann der Drehwinkelsensor 10 bzw. die Auswerteeinheit 24 eine Eigendiagnosefunktion betreiben, mit der erkannt werden kann, dass das Rotorelement 14 fehlt und/oder dass eine der Empfangsspulen eine elektrische Unterbrechung aufweist. Außerdem können EMV-Störeinflüsse, die in der Regel als homogenes Feld vorliegen, unterdrückt werden.

Die zweite Empfangsspule 22b und die dritte Empfangsspule 22c sind aus kreisbogenförmigen Leiterbahnen 40a, 40b zusammengesetzt, die über ihre Enden und über die geraden Leiterbahnen 46, 48 zusammengesetzt sind. Jede der zweiten bzw. dritten Empfangsspulen 22b, 22c weist Teilwindungen 50c, 50d, 50e auf, die in Umfangsrichtung aufeinander abfolgend gegenläufig orientiert sind. Die ersten, hier mittigen, Teilwindungen 50d weisen den gleichen Umriss und/oder die gleiche Fläche auf wie eine der Teilwindungen 50a, 50b der ersten Empfangsspule 22a. Die zweiten und dritten, hier seitlichen, Teilwindungen 50c und 50e weisen zusammengesetzt den gleichen Umriss und/oder zusammen die gleiche Fläche wie eine der Teilwindungen 50a, 50b, 50d auf.

Die Kreuzungspunkte der kreisbogenförmigen Leiterbahnen 40a, 40b der ersten, zweiten und dritten Empfangsspule 22a, 22b, 22c befinden sich auf dem Innenkreis 32 (mit einem ersten Radius r1), einem Mittenkreis 52 (mit einem zweiten Radius r2) und dem Außenkreis 34 (mit einem dritten Radius r3).

Der zweite Radius r2 kann dabei der Mittelwert aus dem ersten Radius r1 und dem dritten Radius r3 sein: r2=(r1+r3)/2. Der erste Radius r1 ist größer als die Summe aus dem inneren Radius ri und der Breite b für die Leiterbahnen 42, 44 der Sendespule 20. Beispielsweise kann gelten: r1=ri+2b sowie r3=ra-2b.

Die Kreuzungspunkte der kreisbogenförmigen Leiterbahnen 40a, 40b sind in Umfangsrichtung mit dem gleichen Winkel beabstandet. Der Winkel zwischen den Kreuzungspunkten beträgt (3/4 (hier 30°). Die Kreuzungspunkte der kreisbogenförmigen Leiterbahnen 40a, 40b der Empfangsspule 22a befinden sich damit bei 0°, (3/4, (3/2, 3(3/4 und β. Die Kreuzungspunkte der kreisbogenförmigen Leiterbahnen 40a, 40b der Empfangsspulen 22b und 22c sind gegenüber denen der Empfangsspule 22a jeweils um β/12 nach links und rechts versetzt.

Im Allgemeinen ergibt sich die benötigte geometrische Verdrehung £ der Empfangsspulen 22 aus dem Messbereich β und der Anzahl der Empfangsspulen m gemäß £ *=*/*3* / (2·m).

Im dargestellten Ausführungsbeispiel ergibt sich für ein Dreiphasensystem (m=3) eine geometrische Verdrehung ξ der drei Empfangsspulen 22a, 22b, 22c um 20° (ξ=120° / (2·3) = 20°). Bei der Verdrehung wird derjenige Teil der Empfangsspulen 22b, 22c, der nach rechts den Messbereich *β* überschreitet, links bei 0° eingefügt.

Es ist möglich, die drei Empfangsspulen 22a, 22b, 22c in lediglich zwei Ebenen der Leiterplatte 18 auszuführen. Beispielsweise können die kreisbogenförmigen Leiterbahnen 40a, 40b und die geradlinigen Leiterbahnen 46, 48 auf den beiden Seiten der Leiterplatte 18 angeordnet sein. Eine Ausführung in lediglich zwei Ebenen hat den Vorteil einer kostengünstigen Leiterplatte 18. Außerdem ist der mittlere Abstand aller Empfangsspulen zum Target nahezu identisch, so dass annährend gleiche Signalpegel für die Messsignale erreicht werden und die Rückrechnung einfach und robust durchzuführen ist.

Dies kann folgendermaßen erreicht werden: Kreisbogenförmige Leiterbahnen 40a, 40b, die von radial innen nach radial außen verlaufen und von einem kleineren zu einem größeren Radius (r1, r2, r3), werden in einer Ebene platziert und die verbleibenden kreisbogenförmigen Leiterbahnen 40a, 40b in der anderen Ebene. Bei der zweiten Empfangsspule 22b und der dritten Empfangsspule 22c werden die geradlinigen Leiterbahnen 46, 48 einander überdeckend in verschiedenen Ebenen platziert. An ihren Enden werden die Leiterbahnen 40a, 40b, 46, 48 mittels Durchkontaktierungen 54 verbunden, von denen aus Gründen der Übersichtlichkeit nicht alle mit Bezugszeichen markiert sind. Die beiden Durchkontaktierungen 54 der Empfangsspule 22a sind dabei etwas in das Innere des Ringsektorbereichs 30 verschoben. Mit anderen Worten, wenn man um die Achse A von kleinem zu großem Winkel geht, sind erste Leiterbahnen 40b, die sich auf ihrem Weg von radial innen nach außen erstrecken (d.h. rechtsgekrümmt sind), in einer Ebene anzuordnen, und sind zweite Leiterbahnen 40b, die sich von radial außen nach innen erstrecken (d.h. linksgekrümmt sind), in einer weiteren Ebene anzuordnen.

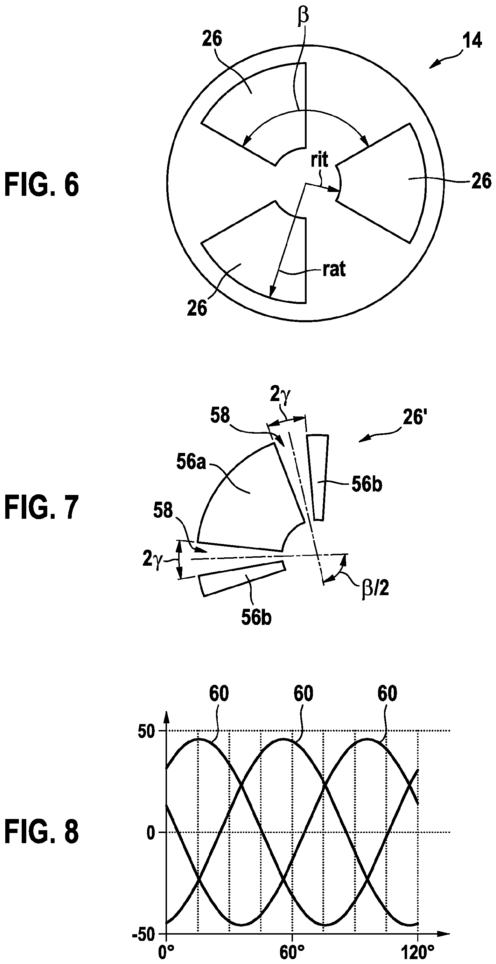

Die Fig. 6 zeigt eine schematische Draufsicht auf ein Rotorelement 14, das als Vollkreis ausgeführt ist. Es ist auch möglich, dass lediglich ein Winkelbereich des in der Fig. 6 gezeigten Rotorelements 14, der eines oder mehrere der Induktionssegmente 26 umfasst, verwendet wird.

Das Rotorelement 14 kann als Leiterplatte mit Induktionssegmenten 26 als Metallisierung der Leiterplatte oder als metallisches Stanzteil ausgeführt sein, bei dem die Induktionssegmente 26 Erhebungen oder Vertiefungen in dem Stanzteil darstellen.

Die Induktionssegmente 26 sind kreisbogenförmig, wobei sie sich jeweils über eine Hälfte des Messbereichs β erstrecken, d.h. wie hier dargestellt über 60°.

Bevorzugt werden gerade bzw. lineare radiale Begrenzungslinien verwendet, wodurch eine besonders einfache und fertigungssichere Herstellung gewährleitet ist.

Der Innenradius rit und der Außenradius rat der Induktionssegmente 26 können abhängig von dem Innenradius ri und dem Außenradius ra der Sendespule 20 gewählt werden. Beispielsweise kann rit=(ri+b+r1)/2 sowie rat=(ra-b+r3)/2 gelten. Dabei ist b die Breite der Leiterbahnen 42, 44 der Sendespule 20.

Die Fig. 7 zeigt eine alternative Ausführungsform eines Induktionssegments 26`, das aus mehreren Teilsegmenten 56a, 56b aufgebaut ist. Jedes der Induktionssegmente 26 aus der Fig. 6 kann wie das Induktionssegment aus der Fig. 6 aufgebaut sein. Bevorzugt werden gerade bzw. lineare radiale Kanten verwendet.

Die Teilsegmente 56a, 56b sind voneinander durch Aussparungen 58 (beispielsweise Fräsungen) getrennt, die eine andere Leitfähigkeit als die Teilsegmente 56a, 56b aufweisen. Auf diese Weise kann eine Sinusförmigkeit der Messsignale verbessert werden.

Jede der Aussparungen 58 kann beispielsweise einen Winkel von 2γ in Umfangsrichtung breit sein. Dabei kann das mittlere Teilsegment einen Winkel von β/2-2y aufweisen und die äußeren Teilsegmente einen Winkel von γ aufweisen.

Fig. 8 zeigt ein Diagramm mit drei sinusförmigen Messsignalen 60, die von den Empfangsspulen 22a, 22b, 22c abgegeben werden können und die durch ein Rotorelement 14 mit einem oder mehreren Induktionssegmenten 26' gemäß Fig. 7 noch weiter einer Sinusfunktion angenähert werden können. Die Messsignale stellen die Amplitude einer in einer Empfangsspule induzierten Wechselspannung dar, der vom Winkel des Rotorelements 14 gegenüber dem Statorelement 12 abhängig ist.

Aufgrund unterschiedlich langer Zuleitungen, einer Positionierung von Leiterbahnen in unterschiedlichen Ebenen der Leiterplatte 18 und mechanischer Toleranzen können die Messsignale 60 beispielsweise offsetbehaftet (d.h. die drei Messsignale 60 verlaufen in einem solchen Fall nicht symmetrisch bezüglich der x-Achse).

Dieser Offset kann aus möglichst sinusförmigen Messsignalen 60 besonders leicht herausgerechnet werden, beispielsweise über eine Clarke-Transformation. Möglichst sinusförmige Messsignale können auch deshalb vorteilhaft sein, weil trigonometrische Gesetze wie z.B. sin²+cos²=1 Anwendung finden können und zumindest für eine Plausibilisierung der Signale oder aber für eine Korrektur verwendet werden können.

Beispielsweise entstehen in den drei Empfangsspulen 22a, 22b, 22c drei sinusförmige Messsignale 60 mit typischerweise 120° elektrischem Phasenversatz, die durch Anwendung einer Clarke-Transformation in ein Sinus/Cosinus-System überführt werden können. Mit Hilfe der Arcus-Tangens-Funktion kann dann daraus auf den Drehwinkel geschlossen werden.

Es ist auch möglich, dass der Drehwinkelsensor 10 lediglich zwei Empfangsspulen 22 mit 90° elektrischem Phasenversatz umfasst (wobei sich der mechanische und der elektrische Phasenversatz unterscheiden kann). In diesem Fall entsteht durch Multiplikation der Amplitude der beiden Messsignale 60 mit dem Cosinus der Phase ein (idealerweise) offsetfreies Sinus/Cosinus-System. Mit Hilfe der Arcus-Tangens-Funktion kann daraus auf den Drehwinkel des Rotorelements 14 geschlossen werden.

Im Allgemeinen werden zur Rückrechnung der Messsignale 60 über die Arcus-Tangens-Funktion mindestens zwei Empfangsspulen 22a, 22b benötigt.

Aus Redundanzgründen kann der Drehwinkelsensor 10 auch mit sechs Empfangsspulen 22 ausgestattet sein, die beispielsweise alle in zwei Ebenen der Leiterplatte 18 realisiert werden können. Jeweils drei der sechs Empfangsspulen 22 können dann als redundantes Dreiphasensystem verwendet werden. Da die Empfangsspulen 22 dann alle im Mittel gleich weit vom Rotorelement 14 entfernt sind (im Vergleich zu einer Realisierung in sechs oder mehr Ebenen), ist der Offset der Messsignale 60 in etwa identisch und die Pegel vergleichbar hoch. Dies erleichtert die Auswertung erheblich.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Drehwinkelsensor (10), umfassend:
ein Statorelement (12) mit einer Sendespule (20) und wenigstens zwei innerhalb der Sendespule (20) angeordneten Empfangsspulen (22), die auf einer Leiterplatte (18) angeordnet sind;
ein bezüglich des Statorelements (12) um eine Drehachse (A) drehbar gelagertes Rotorelement (14), über das die Sendespule (20) mit den wenigstens zwei Empfangsspulen (22) induktiv gekoppelt ist, so dass die induktive Kopplung von einem Drehwinkel zwischen dem Statorelement (12) und dem Rotorelement (14) abhängig ist und die Sendespule (20) in den wenigstens zwei Empfangsspulen (22) wenigstens zwei winkelabhängige Wechselspannungen induziert;
wobei das Rotorelement (14) und die wenigstens zwei Empfangsspulen (22) derart ausgebildet sind, dass in den Empfangsspulen (22) eine Wechselspannung induziert wird, deren Amplitude sinusförmig von dem Drehwinkel abhängig ist,
wobei die wenigstens zwei Empfangsspulen (22) aus miteinander elektrisch verbundenen kreisbogenförmigen Leiterbahnen (40a, 40b) aufgebaut sind, so dass jede der wenigstens zwei Empfangsspulen (22) aus bezüglich eines Stromflusses gegenläufig orientierten Teilwindungen (50a, 50b, 50c, 50d, 50e) aufgebaut ist, von denen jede in einer radialen Richtung (R) von wenigstens einer nach links gekrümmten kreisbogenförmigen Leiterbahn (40a) und wenigstens einer gegenüberliegenden nach rechts gekrümmten kreisbogenförmigen Leiterbahn (40b) begrenzt ist.

2. Drehwinkelsensor (10) nach Anspruch 1,
wobei die wenigstens zwei Empfangsspulen (22) in einem Ringsektorbereich (30) innerhalb der Sendespule (20) angeordnet sind, der durch einen Innenkreis (32) um die Drehachse (A), einen Außenkreis (34) um die Drehachse (A) und zwei den Innenkreis (32) mit dem Außenkreis (34) verbindenden Radiallinien (36, 38) definiert ist, die über einen Messbereich (β) des Drehwinkelsensors (10) entlang des Umkreises voneinander beabstandet sind;
wobei Enden der kreisbogenförmigen Leiterbahnen (40a, 40b) auf dem Ringsektorbereich (30) liegen.

3. Drehwinkelsensor (10) nach einem der vorhergehenden Ansprüche,
wobei die kreisbogenförmigen Leiterbahnen (40a, 40b) alle einen gleichen Krümmungsradius aufweisen.

4. Drehwinkelsensor (10) nach einem der vorhergehenden Ansprüche,
wobei Teilwindungen (50a, 50b, 50c, 50d, 50e) verschiedener Empfangsspulen (22a, 22b, 22c) in Umfangsrichtung um einen Winkel zueinander versetzt sind, der durch den Messbereich (β) geteilt durch die Anzahl der Empfangsspulen bestimmt ist.

5. Drehwinkelsensor (10) nach einem der vorhergehenden Ansprüche,
wobei eine Empfangsspule (22b, 22c) Teilwindungen (50c, 50d, 50e) mit unterschiedlicher Fläche aufweist; und/oder
wobei bei einer Empfangsspule (22a, 22b, 22c) die Fläche aller in einer ersten Richtung orientierten Teilwindungen (50a, 50c, 50e) gleich der Fläche aller in einer zweiten Richtung orientierten Teilwindungen (50b, 50d) ist.

6. Drehwinkelsensor (10) nach Anspruch 2,
wobei wenigstens eine Empfangsspule (22b, 22c) gerade Leiterbahnen (46, 48) aufweist, die entlang der Radiallinien (36, 38) des Ringsektorbereichs (30) verlaufen.

7. Drehwinkelsensor (10) nach einem der vorhergehenden Ansprüche,
wobei die wenigstens zwei Empfangsspulen (22a, 22b, 22c) in zwei Ebenen der Leiterplatte (18) gebildet sind; und/oder wobei an Enden der kreisbogenförmigen Leiterbahnen (40a, 40b) Durchkontaktierungen (54) vorgesehen sind, bei denen kreisbogenförmige Leiterbahnen (40a, 40b) in unterschiedlichen Ebenen verbunden sind; und/oder
wobei die kreisbogenförmigen Leiterbahnen (40a, 40b) einer Empfangsspule (22a, 22b, 22c) abwechselnd in gegenüberliegenden Ebenen der Leiterplatte (18) angeordnet sind.

8. Drehwinkelsensor (10) nach einem der vorhergehenden Ansprüche, wobei das Rotorelement (14) wenigstens ein Induktionssegment (26) mit einer anderen Leitfähigkeit als in Umfangsrichtung um die Drehachse (A) daneben liegende Bereiche des Rotorelements (14) aufweist; und/oder wobei das wenigstens eine Induktionssegment (26) ringsektorförmig ist.

9. Drehwinkelsensor (10) nach Anspruch 8,
wobei das wenigstens eine Induktionssegment (26) in Umfangsrichtung einen Öffnungswinkel aufweist, der halb so groß ist wie der Messbereich (β) des Drehwinkelsensors (10).

10. Drehwinkelsensor (10) nach Anspruch 9,
wobei das wenigstens eine Induktionssegment (26') mehrere radiale Aussparungen (58) mit einer anderen Leitfähigkeit als das Induktionssegment (26') aufweist.

11. Drehwinkelsensor (10) nach Anspruch 10, wobei die Aussparungen (58) in Umfangsrichtung mit einem Winkel beabstandet sind, der halb so groß ist wie der Messbereich (β) des Drehwinkelsensors (10).

12. Statorelement (12) für einen Drehwinkelsensor (10), das Statorelement (12) umfassend:
eine Sendespule (20) und wenigstens zwei innerhalb der Sendespule (20) angeordnete Empfangsspulen (22), die auf einer Leiterplatte (18) angeordnet sind;
wobei die wenigstens zwei Empfangsspulen (22) aus miteinander elektrisch verbundenen kreisbogenförmigen Leiterbahnen (40a, 40b) aufgebaut sind, so dass jede der wenigstens zwei Empfangsspulen (22) aus bezüglich eines Stromflusses gegenläufig orientierten Teilwindungen (50a, 50b, 50c, 50d) aufgebaut ist, von denen jede in einer radialen Richtung (R) von wenigstens einer nach links gekrümmten kreisbogenförmigen Leiterbahn (40a) und wenigstens einer gegenüberliegenden nach rechts gekrümmten kreisbogenförmigen Leiterbahn (40b) begrenzt ist.

## Claims

1. Rotational angle sensor (10), comprising:
a stator element (12) with a transmitting coil (20) and at least two receiving coils (22) arranged within the transmitting coil (20), which are arranged on a circuit board (18);
a rotor element (14), which is mounted rotatably about an axis of rotation (A) with respect to the stator element (12) and by way of which the transmitting coil (20) is inductively coupled to the at least two receiving coils (22), so that the inductive coupling is dependent on a rotational angle between the stator element (12) and the rotor element (14) and the transmitting coil (20) induces at least two angle-dependent alternating voltages in the at least two receiving coils (22);
wherein the rotor element (14) and the at least two receiving coils (22) are formed in such a way that an alternating voltage of an amplitude that is sinusoidally dependent on the rotational angle is induced in the receiving coils (22),
wherein the at least two receiving coils (22) are made up of arcuate conductor tracks (40a, 40b) electrically connected to one another, so that each of the at least two receiving coils (22) is made up of partial turns (50a, 50b, 50c, 50d, 50e) oriented oppositely with respect to a current flow, each of which is delimited in a radial direction (R) by at least one arcuate conductor track (40a) curved to the left and at least one opposite arcuate conductor track (40b) curved to the right.

2. Rotational angle sensor (10) according to Claim 1, wherein the at least two receiving coils (22) are arranged in a ring sector region (30) within the transmitting coil (20), which ring sector region is defined by an inner circle (32) around the axis of rotation (A), an outer circle (34) around the axis of rotation (A) and two radial lines (36, 38) connecting the inner circle (32) to the outer circle (34), which radial lines are spaced apart from one another along the circumference over a measuring range (β) of the rotational angle sensor (10); wherein ends of the arcuate conductor tracks (40a, 40b) lie on the ring sector region (30).

3. Rotational angle sensor (10) according to one of the preceding claims,
wherein the arcuate conductor tracks (40a, 40b) all have an equal radius of curvature.

4. Rotational angle sensor (10) according to one of the preceding claims,
wherein partial turns (50a, 50b, 50c, 50d, 50e) of different receiving coils (22a, 22b, 22c) are offset in relation to one another in the circumferential direction by an angle which is determined by the measuring range (β) divided by the number of receiving coils.

5. Rotational angle sensor (10) according to one of the preceding claims,
wherein a receiving coil (22b, 22c) has partial turns (50c, 50d, 50e) with different surface areas; and/or wherein on one receiving coil (22a, 22b, 22c) the surface area of all the partial turns (50a, 50c, 50e) oriented in one direction is equal to the surface area of all the partial turns (50b, 50d) oriented in a second direction.

6. Rotational angle sensor (10) according to Claim 2, wherein at least one receiving coil (22b, 22c) has straight conductor tracks (46, 48), which run along the radial lines (36, 38) of the ring sector region (30) .

7. Rotational angle sensor (10) according to one of the preceding claims,
wherein the at least two receiving coils (22a, 22b, 22c) are formed in two planes of the circuit board (18); and/or
wherein vertical interconnect accesses (54), where arcuate conductor tracks (40a, 40b) in different planes are connected, are provided at ends of the arcuate conductor tracks (40a, 40b); and/or
wherein the arcuate conductor tracks (40a, 40b) of a receiving coil (22a, 22b, 22c) are arranged alternately in opposite planes of the circuit board (18) .

8. Rotational angle sensor (10) according to one of the preceding claims,
wherein the rotor element (14) has at least one induction segment (26) of a different conductivity than regions of the rotor element (14) lying next to it in the circumferential direction around the axis of rotation (A); and/or
wherein the at least one induction segment (26) is in the form of a sector of a ring.

9. Rotational angle sensor (10) according to Claim 8, wherein the at least one induction segment (26) has in the circumferential direction an acceptance angle which is half the measuring range (β) of the rotational angle sensor (10).

10. Rotational angle sensor (10) according to Claim 9, wherein the at least one induction segment (26') has a number of radial clearances (58) of a different conductivity than the induction segment (26').

11. Rotational angle sensor (10) according to Claim 10, wherein the clearances (58) are spaced apart in the circumferential direction with an angle that is half the measuring range (β) of the rotational angle sensor (10).

12. A stator element (12) for a rotational angle sensor (10), the stator element (12) comprising:
a transmitting coil (20) and at least two receiving coils (22) arranged within the transmitting coil (20), which receiving coils are arranged on a circuit board (18);
wherein the at least two receiving coils (22) are made up of arcuate conductor tracks (40a, 40b) electrically connected to one another, so that each of the at least two receiving coils (22) is made up of partial turns (50a, 50b, 50c, 50d) oriented oppositely with respect to a current flow, each of which is delimited in a radial direction (R) by at least one arcuate conductor track (40a) curved to the left and at least one opposite arcuate conductor track (40b) curved to the right.

## Revendications

1. Capteur d'angle de rotation (10), comprenant :
un élément de stator (12) pourvu d'une bobine émettrice (20) et d'au moins deux bobines réceptrices (22) disposées à l'intérieur de la bobine émettrice (20), qui sont disposées sur une carte de circuits imprimés (18) ;
un élément de rotor (14) monté rotatif autour d'un axe de rotation (A) par rapport à l'élément de stator (12) et par l'intermédiaire duquel la bobine émettrice (20) est couplée par induction auxdites au moins deux bobines réceptrices (22) de sorte que le couplage inductif dépend d'un angle de rotation entre l'élément de stator (12) et l'élément de rotor (14), et la bobine émettrice (20) induit dans lesdites au moins deux bobines réceptrices (22) au moins deux tensions alternatives dépendantes de l'angle ;
dans lequel l'élément de rotor (14) et les au moins deux bobines réceptrices (22) sont réalisés de telle sorte que dans les bobines réceptrices (22) est induite une tension alternative dont l'amplitude dépend de manière sinusoïdale de l'angle de rotation,
dans lequel les au moins deux bobines réceptrices (22) sont composées de pistes conductrices en arc de cercle (40a, 40b), reliées électriquement l'une à l'autre, de sorte que chacune des au moins deux bobines réceptrices (22) est composée d'enroulements partiels (50a, 50b, 50c, 50d, 50e) orientés en sens opposé par rapport à une conduction de courant, dont chacun est limité dans une direction radiale (R) par au moins une piste conductrice en arc de cercle (40a), courbée à gauche, et par au moins une piste conductrice en arc de cercle (40b) opposée, courbée à droite.

2. Capteur d'angle de rotation (10) selon la revendication 1, dans lequel les au moins deux bobines réceptrices (22) sont disposées dans une zone de secteur annulaire (30) à l'intérieur de la bobine émettrice (20), qui est définie par un cercle intérieur (32) autour de l'axe de rotation (A), un cercle extérieur (34) autour de l'axe de rotation (A) et deux lignes radiales (36, 38) reliant le cercle intérieur (32) au cercle extérieur (34) et qui sont espacées l'une par rapport à l'autre sur une zone de mesure (β) du capteur d'angle de rotation (10) le long de la circonférence ;
dans lequel les extrémités des pistes conductrices en arc de cercle (40a, 40b) se trouvent sur la zone de secteur annulaire (30).

3. Capteur d'angle de rotation (10) selon l'une quelconque des revendications précédentes, dans lequel les pistes conductrices en arc de cercle (40a, 40b) présentent toutes un même rayon de courbure identique.

4. Capteur d'angle de rotation (10) selon l'une quelconque des revendications précédentes, dans lequel des enroulements partiels (50a, 50b, 50c, 50d, 50e) de différentes bobines réceptrices (22a, 22b, 22c) sont décalés les uns par rapport aux autres dans la direction circonférentielle d'un angle qui est déterminé par la zone de mesure (β) divisée par le nombre des bobines réceptrices.

5. Capteur d'angle de rotation (10) selon l'une quelconque des revendications précédentes,
dans lequel une bobine réceptrice (22b, 22c) présente des enroulements partiels (50c, 50d, 50e) de différentes superficies ; et/ou
dans lequel pour une bobine réceptrice (22a, 22b, 22c) la superficie de tous les enroulements partiels (50a, 50c, 50e) orientés dans une première direction est égale à la superficie de tous les enroulements partiels (50b, 50d) orientés dans une deuxième direction.

6. Capteur d'angle de rotation (10) selon la revendication 2, dans lequel au moins une bobine réceptrice (22b, 22c) présente des pistes conductrices droites (46, 48) qui s'étendent le long des lignes radiales (36, 38) de la zone de secteur annulaire (30).

7. Capteur d'angle de rotation (10) selon l'une quelconque des revendications précédentes,
dans lequel les au moins deux bobines réceptrices (22a, 22b, 22c) sont formées dans deux plans de la carte de circuits imprimés (18) ; et/ou
dans lequel des trous d'interconnexion (54) sont prévus aux extrémités des pistes conductrices en arc de cercle (40a, 40b), au niveau desquels des pistes conductrices en arc de cercle (40a, 40b) sont reliées dans différents plans ; et/ou
dans lequel les pistes conductrices en arc de cercle (40a, 40b) d'une bobine réceptrice (22a, 22b, 22c) sont disposées en alternance dans des plans opposés de la carte de circuits imprimés (18).

8. Capteur d'angle de rotation (10) selon l'une quelconque des revendications précédentes,
dans lequel l'élément de rotor (14) présente au moins un segment d'induction (26) ayant une autre conductivité que dans des zones de l'élément de rotor (14), adjacentes dans la direction circonférentielle autour de l'axe de rotation (A) ; et/ou
dans lequel ledit au moins un segment d'induction (26) est en forme de secteur annulaire.

9. Capteur d'angle de rotation (10) selon la revendication 8, dans lequel ledit au moins un segment d'induction (26) présente dans la direction circonférentielle un angle d'ouverture qui est égal à la moitié de la zone de mesure (β) du capteur d'angle de rotation (10).

10. Capteur d'angle de rotation (10) selon la revendication 9, dans lequel ledit au moins un segment d'induction (26') présente plusieurs évidements radiaux (58) ayant une autre conductivité que le segment d'induction (26).

11. Capteur d'angle de rotation (10) selon la revendication 10, dans lequel les évidements (58) sont espacés dans la direction circonférentielle d'un angle qui est égal à la moitié de la zone de mesure (β) du capteur d'angle de rotation (10).

12. Elément de stator (12) pour un capteur d'angle de rotation (10), l'élément de stator (12) comprenant :
une bobine émettrice (20) et au moins deux bobines réceptrices (22) disposées à l'intérieur de la bobine émettrice (20), qui sont disposées sur une carte de circuits imprimés (18) ;
dans lequel les au moins deux bobines réceptrices (22) sont composées de pistes conductrices en arc de cercle (40a, 40b), électriquement reliées l'une à l'autre, de sorte que chacune des au moins deux bobines réceptrices (22) est composée d'enroulements partiels (50a, 50b, 50c, 50d) orientés en sens opposé par rapport à une conduction de courant, dont chacun est limité dans une direction radiale (R) par au moins une piste conductrice en arc de cercle (40a) courbée à gauche, et par au moins une piste conductrice en arc de cercle (40b) opposée, courbée à droite.
